# EUROPÄISCHE PATENTSCHRIFT

(11) **EP 1 097 540 B1**
(45) Veröffentlichungstag und Bekanntmachung des Hinweises auf die Patenterteilung: **15.12.2004**
(21) Anmeldenummer: 99942732.1
(22) Anmeldetag: 01.07.1999
(51) Int. Cl.: H04L 1/22

(54) **VERFAHREN UND VORRICHTUNG ZUM OPTIMIEREN DER ÜBERTRAGUNGS- UND AUSFALLSICHERHEIT IN HOCHBITRATIGEN DATENNETZEN**
METHOD AND DEVICE FOR OPTIMISING THE TRANSMISSION SAFETY AND THE DEFECT TOLERANCE IN HIGH-BIT-RATE DATA NETWORKS
PROCEDE ET DISPOSITIF POUR OPTIMISER LA SECURITE DE TRANSMISSION ET LA TOLERANCE AUX DEFAUTS DANS DES RESEAUX DE DONNEES A DEBIT BINAIRE ELEVE

(30) Priorität: 14.07.1998 DE 19831562
(43) Veröffentlichungstag der Anmeldung: 09.05.2001
(73) Patentinhaber: SIEMENS AKTIENGESELLSCHAFT, 80333 München (DE)
(72) Erfinder: KÖPP, Jörg, D-81476 München (DE); KLUG, Andreas, D-83607 Holzkirchen (DE)
(86) Internationale Anmeldenummer: PCT/DE1999/001913
(87) Internationale Veröffentlichungsnummer: WO 2000/004672

(56) Entgegenhaltungen:
- EP-A- 0 652 658
- WO-A-95/06363
- SPIESS K. ET AL. : "ERHÖHTE BETRIEBSSICHERHEIT VON 2-MBIT/S-ÜBERTRAGUNGSSTRECKEN" TELCOM REPORT, Bd. 8, Nr. 3, Mai 1985 (1985-05) - Juni 1985 (1985-06), Seiten 208-213, XP002125586 Erlangen, Deutschland
- KAWASE N ET AL: "ROUTE DIVERSITY WITH HITLESS PATH SWITCHING" ELECTRONICS LETTERS, Bd. 30, Nr. 23, 10. November 1994 (1994-11-10), Seite 1962-1963 XP000495738 Stevenage, Vereinigtes Königreich ISSN: 0013-5194
- SCHICKNER M J: "SERVICE PROTECTION IN THE TRUNK NETWORK" BRITISH TELECOMMUNICATIONS ENGINEERING, Bd. 7, Nr. 2, Juli 1988 (1988-07), Seite 101-109 XP000001414 London, Vereinigtes Königreich ISSN: 0262-401X

## Beschreibung

Die Erfindung betrifft ein Verfahren und eine Vorrichtung zur Effektivierung der Übertragungs- und Ausfallsicherheit in hochbitratigen Datennetzen mittels Signalleitungsredundanz zwischen den Netzknoten, wobei parallele Signalleitungen wahlweise als Arbeits- oder Schutzleitung belegbar sind oder geschaltet werden können gemäß Oberbegriff des Patentanspruchs 1 oder 3.

Zunehmende Datenübertragungsmengen und höhere Forderungen an die Übertragungssicherheit in Netzwerken führten zur Entwicklungen spezieller fehlertoleranter Datenübertragungsprotokolle und zum Vorsehen von Leitungsredundanzen, um bei Hardware- oder Leitungsausfällen über geänderte Übertragungsstrecken dennoch die Funktionen innerhalb eines Netzes im gewünschten Maße aufrechtzuerhalten.

Das Prinzip des Vorsehens von Leitungsredundanzen zum Erhalt fehlertoleranter Datenübertragungsnetzwerke ist seit längerem bekannt, wobei vom Netzwerk selbst entsprechend dessen vorgesehener Struktur durch flexible Übertragungswegänderung fehlerhafte Knoten oder Leitungsabschnitte umgangen werden können.

In dem Falle, wenn faseroptische Übertragungsstrecken, d.h. Lichtwellenleiter eingesetzt werden, ist es notwendig, für die Signalumschaltung optische Schalteinheiten und Multiplexer, aber auch Koppler und Splitter einzusetzer. Bekanntermaßen führen jedoch derartige Baugruppen nicht nur zu einer Erhöhung der Kosten bei der Erstellung des Netzes bzw. beim Betreiben eines solchen Netzes, sondern es treten unerwünschte Dämpfungen und damit Signalverluste bedingt durch eine Verschlechterung des Signal-Rausch-Verhältnisses auf.

Um Stand-by-Funktionen von Schutzeinrichtungen einschließlich redundanter Leitungsführung zu vermeiden, wurden Netzwerkstrukturen entworfen, welche sich durch eine dynamische Wahl von Verbindungen zwischen den Knoten und eine entsprechend gestaltete Architektur auszeichnen. Probleme bestehen jedoch hier in dem erforderlichen zentralisierten oder verteilten Steuerungssystem, welches die einzelnen Knoten und Leitungen hinsichtlich gewünschter Übertragungseigenschaften überwacht, um bei Ausfall einen neuen Verbindungsweg festzulegen.

In Anlehnung bisher eingeführter Datennetze wird daher nach wie vor für hochbitratige Übertragungen beispielsweise über ein mehrschichtiges Netzwerk vom Typ SONET (Synchronous Optical Network) aus Gründen der dort vorgesehenen hohen Verfügbarkeitsanforderungen auf Leitungsredundanzmechanismen in Verbindung mit entsprechenden Datenübertragungsprotokollen zurückgegriffen.

Hinsichtlich der Leitungsredundanz gilt, daß zusätzlich zu den eigentlich benötigten Signalleitungen noch weitere Leitungen parallel betrieben werden.

Weit verbreitet ist die sogenannte 1+1-Leitungsredundanz, bei welcher über zwei Signalleitungen dieselbe Datenübertragungsmenge bzw. -last gesendet und wobei empfangsseitig im jeweiligen Knoten eine der beiden Leitungen zur Weiterverarbeitung ankommender Informationen genutzt wird.

Bei solchen 1+1-Leitungsredundanzen und einer demnach gestalteten Architektur werden Signale des Arbeits(Working)-Kanals über eine permanent wirkende Brückenschaltung auf eine Arbeitsleitung und eine Schutzleitung (Working Line/Protection Line) gegeben. Beide Leitungen übertragen demnach dasselbe Signal bzw. dieselbe Datenmenge und die jeweiligen Knoten sind in der Lage, das Signal von jeweils einem der beiden Leitungen über einen sogenannten Selector auszuwählen.

In den Anschlußknoten kann dann ein sogenanntes Automatic Protection Switching (APS) vorgenommen werden, wobei in jedem Knoten entsprechend der empfangenen Qualität von Signalen über die beiden Leitungen das optimale Signal erkannt und die jeweilige Leitung als Arbeitsleitung oder Arbeitskanal definiert wird.

Im Falle eines erkannten Fehlers auf der momentanen Arbeitsleitung wird über die Selectoren, die in jedem der Knoten vorgesehen sind, ein Umschalten auf die Schutz- oder Protection Leitung vorgenommen.

Bei der sogenannten 1:1-Leitungsredundanz wird die Schutzleitung zur Übertragung von Informationen geringerer Priorität benutzt, d.h. es wird im Gegensatz zur 1+1-Leitungsredundanz die Informations- oder Datenmenge nicht ständig über die Brückenschaltung auf die Arbeits- und Schutzleitung gegeben. Diese Brückenfunktion wird bei der 1:1-Leitungsredundanz erst dann eingestellt, wenn Fehlerfunktionen vorliegen.

Wird bei Netzwerken unter Beachtung der erwähnten Verfügbarkeitsanforderungen und der Datenübertragungssicherheit auf Leitungsredundanzen zurückgegriffen, müssen in konsequenter Weise auch die entsprechenden Interface-Baugruppen redundant vorhanden sein, wobei eine Möglichkeit bestehen muß, bei erkanntem Defekt der aktiven Interface-Baugruppe auf eine im Stand-by-Betrieb vorhandene weitere Baugruppe umzuschalten.

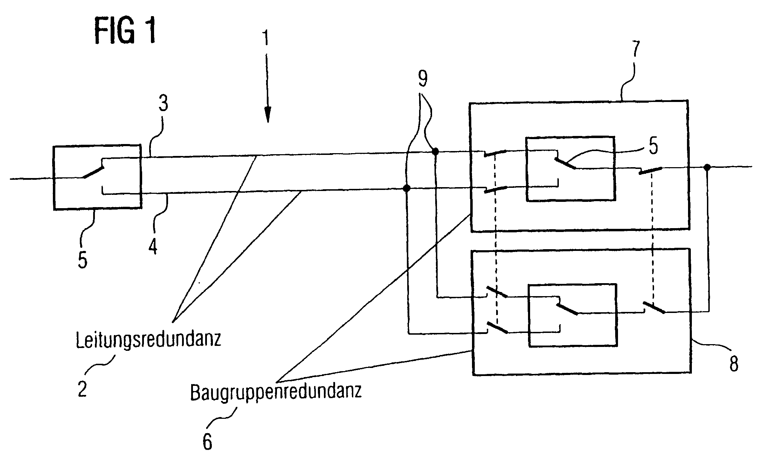

Wie die Fig. 1 als prinzipielle Darstellung einer bekannten Baugruppenredundanz zeigt, muß demnach parallel zur aktiven Interface-Baugruppe eine Stand-by-Interface-Baugruppe angeordnet werden, wobei entsprechende Koppler am Arbeits- und Schutzleitungsanschluß notwendig sind.

Mittels Fig. 1 schließt die jeweils aktive Baugruppe die Leitungsredundanz ab, wobei die Stand-by-Gruppe in der Lage ist, den Verkehr dann zu übernehmen, wenn die aktive Baugruppe ausfällt. Demnach wird dann die bisher aktive Baugruppe von der Leitung getrennt und die Stand-by-Gruppe übernimmt durch Schließen der gezeigten Schalter deren Funktion.

Die Druckschrift EP 0 824 292 A2 betrifft eine Schutzschaltvorrichtung für eine asynchrone Transfermodus-Verbindung und ein Verfahren dafür, worin die Schutzschaltarchitektur aus einem VPG-(virtuelle Pfadgruppe)Quellenknoten, einem VPG-Senkknoten und einer beliebigen Anzahl von VPG-Zwischenknoten zur Unterstützung der VPG besteht. Der Quellenknoten und der Senkknoten sind durch eine Arbeits- und eine Schutzleitung über die Zwischenknoten verbunden. Die hierin gezeigte Anordnung weist jedoch nicht zwei Netzknoten mit jeweils mindestens zwei Interface-Baugruppen auf, worin jede Interfäce-Baugruppe jeweils mit einem Signalleitungspaar für ankommende bzw. abgehende Signalleitungen in Verbindung steht. Zwei parallel angeordnete Interface-Baugruppen innerhalb eines Netzknotens, die immer Daten oder Informationen, die über die Signalleitungen übertragen werden, enthalten, also beide aktiv sind, sind ebenfalls dem Inhalt dieser Druckschrift nicht zu entnehmen.

Aus der WO 95/06363 ist ein System zur Redundanzkontrolle von Übertragungskanälen innerhalb eines Telekommunikationssystems bekannt. Hierbei werden vier identische Empfangseinheiten aufgezeigt, welche jeweils zwei redundante Paare bilden. Innerhalb dieser Empfangseinheiten werden die ankommenden Signale von einem Übertragungskanal hinsichtlich ihrer Qualität geprüft, mögliche Fehler angezeigt, die empfangenen Signale hinsichtlich ihrer Qualität verglichen, so dass jeweils das Signal der höchsten Qualität weitergeleitet wird. Offen bleibt, wie ein Umschalten eines Datenflusses zwischen den einzelnen Signalleitungen vonstatten geht. Die redundanten Empfangseinheitspaare operieren in einem sogenannten Master- und Slave-Status. Demnach ist ein Umschalten bei Auftreten eines Fehlers nur mit einer merkbaren Zeitverzögerung möglich.

Der Nachteil der bekannten Baugruppenredundanz besteht in der Notwendigkeit des Vorsehens von Kopplern bzw. von Baugruppen zum Signalsplitting und dem hier innewohnenden höheren Aufwand bzw. der auftretenden Signaldämpfung. Nachteilig ist auch, daß die entweder aktiv- oder Stand-by betriebenen Interface-Baugruppen Umschalter zum Abschluß der jeweiligen Leitung benötigen mit der Folge von Signalverfälschungen beim eigentlichen Umschaltvorgang. Auch stellen die Interface-Baugruppen, z.B. bei optischen Übertragungsnetzen einen nicht unerheblichen Kostenfaktor dar, der sich dann weiter erhöht, wenn auf die bekannte Lösung der parallelen Anordnung von Baugruppen mit Umschaltmöglichkeit zurückgegriffen wird.

Die Druckschrift JP-A-9 098 181 betrifft einen Transmitter mit einem Zeitschaltarray, welches durch Kreuzverbinden eines aktiven und eines Reservekanals ein zweigerichtetes Übertragungsnetzwerk bildet. Der jeweilige Kanal, in den eine Fehlermeldung auftritt, wird über Schalt- und Brückeneinrichtungen auf einen Reservekanal umgeleitet, wodurch ein Bypass für den Kanal in dem Netzwerk gebildet wird. Zusätzlich sind zwei separate Durchgangseinheiten zum Durchlassen von Signalen auf der Schutzleitung einmal in Vorwärts- und einmal in Rückwärtsrichtung vorgesehen. Sobald ein Fehler durch eine Fehlerdetektionseinheit 38 in den Übertragungsleitungen detektiert wird, wird der entsprechende Kanal von der Arbeitsleitung auf die Schutzleitung umgeleitet. Aus dieser Anordnung ist nicht zu entnehmen, daß zwei parallel angeordnete Interface-Baugruppen innerhalb eines Netzknotens mit einem Paar von Signalleitungen für ankommende bzw. abgehende Signalleitungen ausgestattet ist und beide Interface-Baugruppen innerhalb eines Knotens mittels einer Brückenschaltung immer die Daten oder Informationen, die über die Signalleitungen übertragen werden, enthalten.

Es ist daher Aufgabe der Erfindung, ein Verfahren und eine Vorrichtung zur Effektivierung der Übertragungs- und Ausfallsicherheit in hochbitratigen Datennetzen mittels Signalleitungsredundanz zwischen den Netzknoten anzugeben, wobei in an sich bekannter Weise parallele Signalleitungen wahlweise als Arbeits- oder Schutzleitungen belegbar sind oder geschaltet werden können, dies jedoch nicht nur bei Auftreten eines Leitungsfehlers, sondern auch bei Auftreten eines Ausfalls einer Interface-Baugruppe ermöglicht wird.

Die Lösung der Aufgabe der Erfindung erfolgt mit einem Verfahren in seiner Definition nach Patentanspruch 1 sowie mit einer Vorrichtung nach den Merkmalen des Patentanspruchs 3.

Gemäß dem Grundgedanken der Erfindung wird die bisher diskret umgesetzte Baugruppen- und Leitungsredundanz zusammengefaßt und vereint, wobei hierunter verstanden wird, die Interface-Baugruppen bezüglich der Behandlung von Fehlern als Teil der Leitung zu betrachten. Ein Ausfall der Interface-Baugruppen wird demnach durch Umschaltung zwischen Arbeits- oder Schutzleitung behandelt. Dadurch, daß die Interface-Baugruppen parallel vorhanden und diese parallelen Baugruppen ständig aktiv sind, ist beim Auftreten eines Leitungsfehlers nur eine Quasi-Umschaltung durch die ohnehin vorhandenen Selectoren unter Fortfall auf zusätzliche Umschalter, vorhanden in der Interface-Baugruppe, möglich.

Demnach ist erfindungsgemäß jede der parallelen Signalleitungen netzknotenseitig mit einer Interface-Baugruppe abgeschlossen, wobei alle Interface-Baugruppen sich wie dargelegt im Normalfall im aktiven Zustand befinden.

Bei Ausfall einer der Interface-Baugruppen wird diesem durch eine quasi virtuelle Signalleitungsumschaltung begegnet. Die vorgesehene Interface-Baugruppenredundanz bewirkt also unmittelbar eine erhöhte Sicherheit bei Leitungsfehlern, wobei weiterhin zwischen den Interface-Baugruppen der ankommenden oder abgehenden parallelen Signalleitungen in jedem der Netzknoten Fehlermeldungen über einen entsprechenden Link übertragbar sind.

Vorrichtungsseitig weist also jeder Netzknoten bei üblicher Leitungsredundanz mindestens zwei Interface-Baugruppen auf, welche jeweils mit einem Signalleitungspaar für ankommende und abgehende Leitungen bzw. Daten oder Informationen in Verbindung stehen. Zwischen den Interface-Baugruppen ist eine Hardware-Verbindung im Sinne des oben erwähnten Fehlermeldelinks vorgesehen.

Von einer üblichen Verarbeitungseinheit kommende Daten werden über eine an sich bekannte Brückenschaltung analog der 1+1-Leitungsredundanz auf beide Interface-Baugruppen geführt und ausgangsseitig der Interface-Baugruppen anliegende ankommende Daten oder Informationen gelangen mittels eines ebenfalls an sich bekannten Selectors auf die Verarbeitungseinheit.

Beide Interface-Baugruppen jedes Neczknotens sind ständig aktiv, wobei bei Leitungsfehlern oder aber auch bei Fehlern in den Interface-Baugruppen über die Selectoren mittels Umschalten dieser eine Leitungsauswahl zwischen der Arbeits (Working)- oder Schutz(Protection)-Leitung vorgenommen wird.

Die Erfindung soll anhand eines Ausführungsbeispiels sowie von Figuren näher erläutert werden.

Hierbei zeigen:
- Fig. 1: ein Blockschaltbild einer bekannten Baugruppenredundanz durch parallele Anordnung einer Stand-by-Interface-Baugruppe und
- Fig. 2: ein Blockschaltbild einer prinzipiellen Darstellung der erfindungsgemäßen Vorrichtung von parallel betriebenen und im aktiven Zustand befindlichen Interface-Baugruppen in den jeweiligen Netzknoten.

Fig. 1 stellt eine Signalübertragungsstrecke 1 eines Netzwerks dar. Die Signalübertragungsstrecke 1 umfaßt eine Leitungsredundanz 2, nämlich eine Signalleitung Working 3 und eine Signalleitung Protection 4.

Beim gezeigten Zustand ist die Signalleitung Working 3 über den Selector 5 aktiv. Diese Leitung dient demnach dem bidirektionalen Übertragen von Daten bzw. Informationen zwischen zwei nicht gezeigten Knoten des Netzwerks.

Eine Baugruppenredundanz 6 umfaßt eine erste Interface-Baugruppe 7 und eine zweite Interface-Baugruppe 8.

Die zweite Interface-Baugruppe 8 ist über Koppler 9 mit ihren Eingängen an der Signalleitung Working 3 und der Signalleitung Protection 4 angeschlossen. Durch eine ausgangsseitige Zusammenführung der ersten und zweiten Interface-Baugruppe 7, 8 ergibt sich eine Parallelschaltung beider, jedoch dergestalt, daß im gezeigten Zustand nur die erste Interface-Baugruppe 7 aktiv ist.
Die zweite Interface-Baugruppe 8 befindet sich im Stand-by-Zustand. Die zweite, im Stand-by-Zustand sich befindende zweite Interface-Baugruppe 8 ist dann in der Lage, den Verkehr zu übernehmen, wenn die aktive Baugruppe, d.h. die erste Interface-Baugruppe 7 ausfällt. Demnach wird die zweite Interface-Baugruppe 8 für den Ausfall der ersten Interface-Baugruppe 7 vorgehalten und es ergibt sich grundsätzlich das Problem unerwünschter Dämpfung von Daten, welche über die Signalleitungsstrecke 1 übertragen werden und die auf die Signalkoppler bzw. Splittingbaugruppe 9 gelangen.

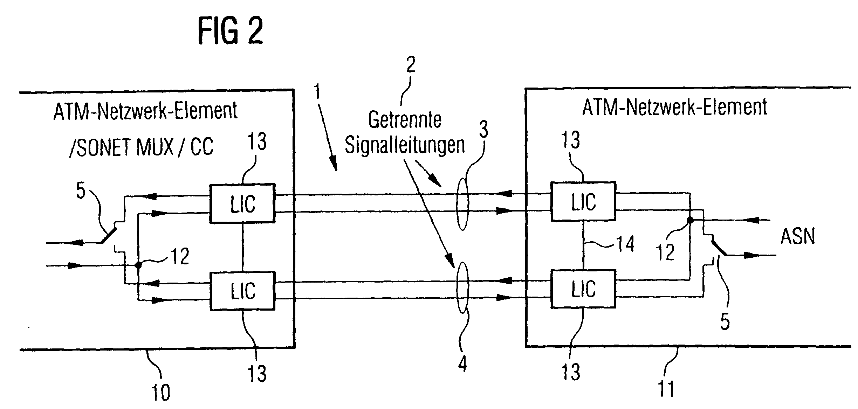

Beim Ausführungsbeispiel nach Fig. 2 ist wiederum eine Signalübertragungsstrecke 1 gezeigt, welche einen ersten Knoten 10 mit einem zweiten Knoten 11 eines Netzwerks verbindet.

In jedem Knoten ist in Analogie zur 1+1-Leitungsredundanz eine Hardwarebaugruppe vorgesehen, welche Selectoren 5 und eine Brücke 12 umfassen. Mit der Pfeildarstellung jeweils symbolisierte ankommende Signale gelangen also auf die Brückenschaltungen 12 und auf dort jeweils vorgesehene zwei Interface-Baugruppen 13. Zwischen den Interface-Baugruppen 13 ist ein Fehlerübertragungslink 14 vorgesehen. Ankommende Signale in den jeweiligen Knoten 10 und 11 werden auf den Selector 5 geführt, welcher von den vorhandenen separaten Leitungen jeweils eine auswählt und diese als Working Line bzw. Arbeitsleitung definiert.

Wie aus der Fig. 2 ersichtlich, sind die Interface-Baugruppen 13 ausgangsseitig auf die vorhandene Leitungsredundanz 2 geführt und werden grundsätzlich parallel betrieben. Das heißt, alle Interface-Baugruppen 13 befinden sich bei Normalbetrieb im aktiven Zustand.

Es wird also gemäß dem Ausführungsbeispiel eine Interface-Baugruppenredundanz und eine Leitungsredundanz vereint, d.h. bezüglich der angestrebten Fehlertoleranz werden die Interface-Baugruppen als Teil der Leitung betrachtet. Bei einem Ausfall einer der Interface-Baugruppen wird dieser durch Leitungsumschaltung unter Rückgriff auf die Selectoren 5 in den Knoten 10, 11 behandelt.

Liegt ein Leitungsfehler vor, ist es nun nicht notwendig, mit Blick auf die in der Fig. 1 gezeigte Baugruppenredundanz 6 eine Stand-by-Baugruppe zu aktivieren, sondern es wird durch das grundsätzliche Aktivsein sowohl der ersten als auch der zweiten Interface-Baugruppe 7, 8 nur eine Quasi-Umschaltung vorgenommen. Es können demnach im Vergleich zum Bekannten mit demselben Hardwareaufwand doppelt so viele Signalleitungen bedient werden, wobei die Selectoren der 1+1-Leitungsredundanz-Architektur die Funktion der ansonsten erforderlich werdenden Schalter in den Interface-Baugruppen nach dem Stand der Technik mit übernehmen. Koppler oder Signalsplitting-Baugruppen in den Signalleitungen können entfallen.

Es hat sich gezeigt, daß die mit vorstehendem Ausführungsbeispiel beschriebene Lösung leicht in hochbitratigen SDH/SONET-Übertragungseinrichtungen implementiert werden können, wobei die Umschaltzeit im Fehlerfall bei im wesentlich 50 ms liegt. Die beschriebene 1+1 ACT/ACT-Redundanz bietet demnach eine kombinierte Signalleitungs- und Baugruppen-Schutzmöglichkeit, so daß sich die Ubertragungs- und Ausfallsicherheit im Datennetz entsprechend erhöht.

## Patentansprüche

1. Verfahren zur Effektivierung der Übertragungs- und Ausfallsicherheit in hochbitratigen Datennetzen mittels Signalleitungsredundanz zwischen Netzknoten (10,11), wobei parallele Signalleitungen (3,4) zwischen den Netzknoten zur Übertragung von Daten oder Informationen wahlweise als Arbeitsoder Schutzleitungen belegbar sind oder geschaltet werden können, sowie netzknotenseitig jeweils vorgesehene Selectoren (5), Brückenschaltungen (12) und Interface-Baugruppen (13), wobei ein Signalleitungspaar (2), zusammengesetzt aus den parallelen Signalleitungen (3,4) für ankommende bzw. abgehende Signalleitungen netzknotenseitig mit einer Interface-Baugruppe (13) abgeschlossen ist,
**dadurch gekennzeichnet, daß**
zwischen den Interface-Baugruppen (13) eines Knotens (10,11) ein Fehlermelde- oder Übertragungslink (14) vorgesehen ist, wobei mittels einer der Brückenschaltungen (12) Daten und Informationen, die von einer Verarbeitungseinheit zu den mindestens zwei Interface-Baugruppen (13) eines Netzknotens kommen, auf diese mindestens zwei Interface-Baugruppen (13) eines Netzknotens geführt wurden und mittels dieser Brückenschaltung (12) die mindestens zwei Interface-Baugruppen (13) jedes Netzknotens (10,11) immer die Daten und Informationen, die über die Signalleitungen (3,4) zu übertragen sind, enthalten, und wobei mittels eines der Selectoren (5) ausgangsseitig der mindestens zwei Interface-Baugruppen (13) eines Netzknotens anliegende ankommende Daten oder Informationen auf eine Verarbeitungseinheit gelangen, und bei einem durch den zwischen den Interface-Baugruppen (13) eines Knotens (10,11) angeordneten Fehlermelde- oder Übertragungslink (14) angezeigten Ausfall einer der Interface-Baugruppe (13) diesem durch Signalleitungsumschaltung mit einer Umschaltzeit von im wesentlichen 50 ms sowie durch die vorgesehene Interface-Baugruppenredundanz Leitungsfehlern unmittelbar begegnet wird, wobei weiterhin zwischen den Interface-Baugruppen (13) der ankommenden und abgehenden parallelen Signalleitungen (3,4) in jedem der Netzknoten Meldungen von Leitungsfehlern oder vom Ausfall einer der Interface-Baugruppen (13) mittels des Fehlermelde- oder Übertragungslinks (14) und eines der Selectoren (5) übertragbar sind.

2. Verfahren nach Anspruch 1,
**dadurch gekennzeichnet,**
**daß** bezüglich der Auswahl der jeweiligen Signalleitung (3,4) bzw. des jeweiligen Signalleitungspaares (2), über welches ankommende Daten mittels des Selectors (5) weitergeleitet werden, die Interface-Baugruppen (13) als Leitungsbestandteil betrachtet werden.

3. Vorrichtung zur Effektivierung der Übertragungs- und Ausfallsicherheit in hochbitratigen Datennetzen mittels Signalleitungsredundanz zwischen den Netzknoten, wobei parallele Signalleitungen (3,4) zwischen den Netzknoten zur Übertragung von Daten oder Informationen wahlweise als Arbeits- oder Schutzleitungen belegbar sind oder geschaltet werden können, sowie netzknotenseitig jeweils vorgesehene Selectoren, Brückenschaltungen und Interface-Baugruppen, wobei jede Interface-Baugruppe (13) jeweils mit einem Signalleitungspaar (2) für ankommende beziehungsweise abgehende Leitungen in direkter Verbindung steht und bei Leitungsfehlern oder Interface-Baugruppen-Fehlern über die Selectoren (5) mittels Umschalten eine Auswahl zwischen Arbeit(working)- oder Schutz(protection)-Leitung erfolgt.
**dadurch gekennzeichnet, daß**
- jeder Netzknoten (10,11) mindestens zwei Interface-Baugruppen (13) aufweist und zwischen den Interface-Baugruppen (13) eines Knotens (10,11) ein Fehlermeldeoder Übertragungslink (14) vorgesehen ist,
- mittels der Brückenschaltung (12) Daten oder Informationen, die von einer Verarbeitungseinheit zu den mindestens zwei Interface-Baugruppen (13) eines Netzknotens kommen, auf diese mindestens zwei Interface-Baugruppen (13) eines Knotens geführt sind und dadurch die mindestens zwei Interface-Baugruppen (13) jedes Netzknotens (10,11) immer die Daten oder Informationen, die über die Signalleitungen (3,4) zu übertragen sind, enthalten, und
- mittels einer der Selectoren (5) ausgangsseitig der Vorrichtung anliegende ankommende Daten oder Information auf eine Verarbeitungseinheit gelangen, wobei die Umschaltung über den Selector bei Leitungsfehlern oder Interface-Baugruppen-Fehlern mit einer Umschaltzeit von im wesentlichen 50 ms stattfindet.

## Claims

1. A method for effecting transmission protection and failure protection in high-speed data networks by means of signal line redundancy between network nodes (10, 11), wherein parallel signal lines (3, 4) between the network nodes can be occupied or switched alternatively as working lines or protection lines for transmitting data or information, and by means of selectors (5), bridge circuits (12) and interface modules (13) which are provided on the network node side in each case, wherein a signal line pair (2) comprising the parallel signal lines (3, 4) for incoming or outgoing signal lines is terminated on the network node side by an interface module (13),
**characterised in that**
provision is made for an error report link or transmission link (14) between the interface modules (13) of a node (10, 11), wherein data and information which come to the interface modules (13), of which there are at least two, of a network node from a processing unit is carried to these interface modules (13), of which there are at least two, of a network node by means of a bridge circuit (12), which bridge circuit (12) ensures that the interface modules (13), of which there are at least two, of each network node (10, 11) always contain the data and information which is to be transmitted via the signal lines (3, 4), and wherein incoming data or information which is waiting on the output side of the interface modules (13), of which there are at least two, of a network node arrives at a processing unit by means of one of the selectors (5), and in the event of a failure of one of the interface modules (13), said failure being indicated by the error reporting link or transmission link (14) which is arranged between the interface modules (13) of a node (10, 11), this is immediately dealt with by means of signal line switching with a switching time of essentially 50 ms and by means of the interface module redundancy line errors, wherein it is additionally possible for reports of line errors or of the failure of one of the interface modules (13) to be transmitted between the interface modules (13) of the incoming and outgoing parallel signal lines (3, 4) in each of the network nodes by means of the error reporting link or transmission link (14) and one of the selectors (5).

2. The method as claimed in Claim 2,
**characterised in that**
with respect to the selection of the relevant signal line (3, 4) or the relevant signal line pair (2), via which incoming data is forwarded by means of the selector (5), the interface modules (13) are considered to be a line component.

3. A device for effecting transmission protection and failure protection in high-speed data networks by means of signal line redundancy between the network nodes, wherein parallel signal lines (3, 4) between the network nodes can be occupied or switched alternatively as working lines or protection lines for transmitting data or information, and by means of selectors, bridge circuits and interface modules which are provided on the network node side in each case, wherein each interface module (13) is directly connected in each case to a signal line pair (2) for incoming or outgoing lines and, in the event of line errors or interface module errors, a selection between working line or protection line is made via the selectors (5) by means of switching,
**characterised in that**
- each network node (10, 11) has at least two interface modules (13) and an error reporting link or transmission link (14) is provided between the interface modules (13) of a node (10, 11),
- data or information, which comes from a processing unit to the interface modules (13), of which there are at least two, of a network node, is supplied to these interface modules (13), of which there are at least two, of a network node, by means of the bridge circuit (12), thereby ensuring that the interface modules (13), of which there are at least two, of each network node (10, 11) always contain the data or information which must be transmitted via the signal lines (3, 4),
- incoming data or information which is waiting on the output side of the apparatus arrives at a processing unit by means of one of the selectors (5), wherein the switching via the selector in the event of line errors or interface module errors takes place with a switching time of essentially 50 ms.

## Revendications

1. Procédé pour optimiser la sécurité de transmission et la tolérance aux défauts dans des réseaux de données à débit binaire élevé au moyen de redondance de lignes de signalisation entre des noeuds de réseau (10, 11), des lignes de signalisation (3, 4) parallèles entre les noeuds de réseau pouvant être affectées au choix comme lignes de travail ou lignes de protection pour la transmission de données ou d'informations, ou pouvant être commutées, ainsi qu'au moyen de sélecteurs (5), de circuits en pont (12) et de sous-groupes d'interface (13) prévus respectivement du côté des noeuds de réseau, une paire de lignes de signalisation (2) pour les lignes de signalisation entrant resp. sortant, constituée des lignes de signalisation (3, 4) parallèles, étant terminée du côté des noeuds de réseau par un sous-groupe d'interface (13),
**caractérisé en ce que**
un lien de signalisation d'erreur ou un lien de transmission (14) est prévu entre les sous-groupes d'interface (13) d'un noeud (10, 11), des données et des informations venant d'une unité de traitement vers au moins deux sous-groupes d'interfaces (13) d'un noeud de réseau, étant menées sur au moins ces deux sous-groupes d'interface (13) d'un noeud de réseau au moyen de l'un des circuits en pont (12), et **en ce qu'**au moyen de ce circuit en pont (12) les au moins deux sous-groupes d'interface (13) de chaque noeud de réseau (10, 11) contiennent toujours les données et les informations qui sont à transmettre par l'intermédiaire des lignes de signalisation (3, 4), et au moyen de l'un des sélecteurs (5), les données ou informations présentes entrant arrivent sur une unité de traitement, du côté sortie des au moins deux sous-groupes d'interface (13) d'un noeud de réseau, et **en ce qu'**en cas d'un défaut de l'un des sous-groupes d'interface (13), indiqué par le lien de signalisation d'erreur ou le lien de transmission (14) placé entre les sous-groupes d'interface (13) d'un noeud (10, 11 ), ce défaut est traité par commutation des lignes de signalisation avec un temps de commutation d'essentiellement 50 ms et **en ce que** les erreurs de ligne sont traitées immédiatement par la redondance prévue des sous-groupes d'interface, des message d'erreurs de ligne ou du défaut de l'un des sous-groupes d'interface (13) étant transférables entre les sous-groupes d'interface (13) des lignes de signalisation (3, 4) parallèles, entrant et sortant dans chacun des noeuds de réseau, au moyen du lien de signalisation d'erreur ou du lien de transmission (14) et de l'un des sélecteurs (5).

2. Procédé selon la revendication 1,
**caractérisé en ce que**
en ce qui concerne la sélection de la ligne de signalisation (3, 4) respective resp. de la paire de lignes de signalisation (2) respective, par l'intermédiaire de laquelle les données entrant sont transmises au moyen du sélecteur (5), les sous-groupes d'interface (13) sont considérés comme composant de ligne.

3. Dispositif pour optimiser la sécurité de transmission et la tolérance aux défauts dans des réseaux de données à débit binaire élevé au moyen de redondance de lignes de signalisation entre les noeuds de réseau, des lignes de signalisation (3, 4) parallèles entre les noeuds de réseau pouvant être affectées au choix comme lignes de travail ou lignes de protection pour la transmission de données ou d'informations, ou pouvant être commutées, ainsi qu'au moyen de sélecteurs, de circuits en pont et de sous-groupes d'interface prévus respectivement du côté du noeud de réseau, chaque sous-groupe d'interface (13) étant respectivement en liaison directe avec une paire de lignes de signalisation (2) pour les lignes entrant respectivement sortant et en ce qu'une sélection entre la ligne de travail (working) ou la ligne de protection (protection) est réalisée, en cas d'erreurs de lignes ou d'erreurs de sous-groupes d'interface, par commutation par l'intermédiaire des sélecteurs (5),
**caractérisé en ce que**
- chaque noeud de réseau (10, 11) présente au moins deux sous-groupes d'interface (13) et **en ce qu'**un lien de signalisation d'erreur ou un lien de transmission (14) est prévu entre les sous-groupes d'interface (13) d'un noeud (10, 11 ),
- des données ou des informations, venant d'une unité de traitement vers au moins deux sous-groupes d'interfaces (13) d'un noeud de réseau, sont conduites sur au moins ces deux sous-groupes d'interface (13) d'un noeud au moyen du circuit en pont (12), et **en ce qu'**ainsi les au moins deux sous-groupes d'interfaces (13) de chaque noeud de réseau (10, 11) contiennent toujours les données ou les informations qui sont à transmettre par l'intermédiaire des lignes de signalisation (3, 4), et
- les données ou informations, présentes du côté sortie du dispositif, arrivent sur une unité de traitement au moyen de l'un des sélecteurs (5), la commutation, en cas d'erreurs de ligne ou d'erreurs des sous-groupes d'interface, ayant lieu par l'intermédiaire du sélecteur avec un temps de commutation d'essentiellement 50 ms.
